(19) Europäisches Patentamt
European Patent Office
Office européen des brevets

(11) **EP 3 056 957 B1**

(12) **EUROPÄISCHE PATENTSCHRIFT**

(45) Veröffentlichungstag und Bekanntmachung des Hinweises auf die Patenterteilung:
**27.03.2019   Patentblatt 2019/13**

(51) Int Cl.:
***G05B 23/02*** *(2006.01)*

(21) Anmeldenummer: **15155283.3**

(22) Anmeldetag: **16.02.2015**

(54) **Diagnoseeinrichtung und -verfahren zur Überwachung des Betriebs eines Regelkreises**

Diagnostic device and method for monitoring the operation of a closed loop

Procédé et dispositif de diagnostic destinés à la surveillance du fonctionnement d'un circuit régulateur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.08.2016   Patentblatt 2016/33**

(73) Patentinhaber: **Siemens Aktiengesellschaft**
**80333 München (DE)**

(72) Erfinder:
• **Heiler, Patrick**
**68753 Waghäusel (DE)**
• **Pfeiffer, Bernd-Markus**
**76744 Wörth (DE)**

(56) Entgegenhaltungen:
**EP-B1- 1 528 447     US-A- 5 838 561**

• **GHRAIZI ET AL: "Performance monitoring of industrial controllers based on the predictability of controller behavior", COMPUTERS & CHEMICAL ENGINEERING, PERGAMON PRESS, OXFORD, GB, Bd. 31, Nr. 5-6, 2. März 2007 (2007-03-02) , Seiten 477-486, XP005901775, ISSN: 0098-1354, DOI: 10.1016/J.COMPCHEMENG.2006.06.009**
• **JELALI ET AL: "An overview of control performance assessment technology and industrial applications", CONTROL ENGINEERING PRACTICE, PERGAMON PRESS, OXFORD, GB, Bd. 14, Nr. 5, 1. Mai 2006 (2006-05-01), Seiten 441-466, XP027906064, ISSN: 0967-0661 [gefunden am 2006-05-01]**

**Beschreibung**

Die Erfindung betrifft eine Diagnoseeinrichtung zur Überwachung des Betriebs eines Regelkreises eines Automatisierungssystems nach dem Oberbegriff des Anspruchs 1 sowie ein entsprechendes Diagnoseverfahren nach dem Oberbegriff des Anspruchs 5.

Wartung und Instandhaltung von automatisierungstechnischen Anlagen können verbessert werden, wenn die korrekte Funktion von Teilanlagen oder Komponenten überwacht wird. Bei nachlassender Funktionsfähigkeit kann gezielt an der richtigen Stelle der Anlage mit Maßnahmen zur Wartung, Instandhaltung oder Fehlerbeseitigung eingegriffen werden. Häufig werden Komponenten von automatisierungstechnischen Anlagen in Regelkreisen miteinander verschaltet. Damit bei nachlassender Leistungsfähigkeit einzelner Regelkreise rechtzeitig und gezielt an der richtigen Stelle der Anlage mit Maßnahmen zur Instandhaltung oder Regleroptimierung eingegriffen werden kann, wäre es von Vorteil, wenn Regelkreise permanent und automatisch bezüglich ihrer Regelgüte überwacht würden.

Ein Diagnoseverfahren zur Überwachung des Betriebs eines Regelkreises ist bereits aus der EP 1 528 447 B1 und R. A. Ghraizi, E. Martinez, C. Prada, F. Cifuentes, J. Martinez (2007), "Performance monitoring of industrial controllers based on the predictability of controller behaviour", Computers and Chemical Engineering, No. 31, 477-486 bekannt. Im Falle eines im Wesentlichen stationären Zustands, d. h. bei weitgehend konstanter Sollwertvorgabe, wird die Varianz einer Folge von Istwert-Daten als stochastisches Merkmal bestimmt und für eine Analyse des Zustands des Regelkreises ausgewertet. Im Falle einer Anregung des Regelkreises entsprechend einem Sollwertsprung werden zur Analyse des Regelkreiszustands die relative Überschwingweite oder das Einschwingverhältnis, d. h. der Quotient aus Anstiegs- und Einschwingzeit der Regelgröße, als deterministische Merkmale ausgewertet.

Üblicherweise gibt es in automatisierungstechnischen Anlagen jedoch zahlreiche Regelkreise, auf welche das bekannte Überwachungsverfahren nicht oder nur mit großen Einschränkungen anwendbar ist. Das ist insbesondere dann der Fall, wenn Regler im Rahmen von vermaschten Reglerstrukturen als Folgeregler von einem anderen, übergeordneten Regler durch Sollwertvorgabe angesteuert werden. Dies betrifft somit alle Folgeregler in Kaskadenregelungen, sowie alle Folgeregler in Verhältnisregelungen. Weil diese Regler ihren Sollwert von einem anderen Funktionsbaustein der Verschaltung in der vermaschten Reglerstruktur erhalten, kann sich der Sollwert ständig verändern und es gibt weder zeitliche Phasen mit konstantem Sollwert noch saubere Sollwertsprünge, die sich im Rahmen der bekannten Überwachung des Regelkreisbetriebs anhand einer Bestimmung eines stochastischen Merkmals bzw. eines deterministischen Merkmals auswerten lassen. Wenn der Sollwert im Rahmen einer Kaskadenregelung von einem Führungsregler erhalten wird, schwankt der Sollwert so stark wie die Stellgröße des Führungsreglers. Wird der Sollwert im Rahmen einer Verhältnisregelung von einem Verhältnisbaustein erzeugt, handelt es sich bei dem Sollwert des Verhältnisreglers häufig um den mit einem konstanten Faktor multiplizierten Istwert eines anderen Regelkreises, der im Betrieb ebenfalls veränderlich ist. Unterlagerte Regelkreise werden daher bei dem bekannten Verfahren meist von einer Überwachung ausgeschlossen.

Der Erfindung liegt daher die Aufgabe zugrunde, eine Diagnoseeinrichtung und ein Diagnoseverfahren zur Überwachung des Betriebs eines Regelkreises zu schaffen, durch welches nicht nur einschleifige Regelkreise sondern auch Regelkreise in vermaschten Strukturen, wie sie z. B. in Kaskadenregelungen oder Verhältnisregelungen vorkommen, auf ihren Zustand überwachbar sind.

Zur Lösung dieser Aufgabe weist die neue Diagnoseeinrichtung der eingangs genannten Art die im kennzeichnenden Teil des Anspruchs 1 angegebenen Merkmale auf. In den abhängigen Ansprüchen sind Weiterbildungen der Erfindung, in Anspruch 5 ein Diagnoseverfahren, in Anspruch 6 ein Computerprogramm zur Durchführung des Diagnoseverfahrens und in Anspruch 7 ein entsprechendes Computerprogrammprodukt beschrieben.

Die Erfindung hat den Vorteil, dass sie neben der Überwachung von einschleifigen Regelkreisen auch die Überwachung von unterlagerten Regelkreisen in vermaschten Strukturen mit mehreren Reglern, wie z. B. bei Kaskadenregelungen oder Verhältnisregelungen, ermöglicht. Dabei werden vorteilhaft im Sinne einer nicht-invasiven Diagnose nur die im regulären Prozessbetrieb anfallenden Daten verwendet. Ein auf einer automatisierungstechnischen Anlage ablaufender Prozess wird durch die Diagnose nicht beeinflusst und kann bei Durchführung einer Diagnose ungestört weiterlaufen. Unterbrechungen eines Automatikbetriebs, in welchen bisher beispielsweise ein Führungsregler zur Durchführung einer Diagnose in Handbetrieb genommen wurde, um durch manuellen Eingriff eine zeitliche Phase mit konstantem Sollwert oder einen Sollwert-Sprung für einen Folgeregler zu erhalten und diesen im unterlagerten Regelkreis mit bekannten stochastischen bzw. deterministischen Merkmalen analysieren zu können, sind in vorteilhafter Weise nicht mehr erforderlich. Dies wird insbesondere durch die Einbeziehung einer Maßzahl für die Streuung der Sollwert-Daten, vorzugsweise für deren Varianz, als stochastisches Merkmal in die Analyse des Regelkreises erreicht. Die Bewertung ist in besonders anschaulicher Weise durch einen Bediener möglich, da eine Kennzahl auf der Basis des Verhältnisses einer Maßzahl für die Streuung der Istwert-Daten zu einer Maßzahl für die Streuung der Sollwert-Daten bestimmt wird. Mit einer derartigen Kennzahl wird der Vergleich beispielsweise der Varianzen von Soll- und Istwert erheblich vereinfacht. Wenn der Folgeregler ideal arbeitet und es ihm gelingt, den Istwert gut dem Sollwert nachzuführen, werden die beiden Varianzen ähnlich groß sein und das Verhältnis etwa den Wert 1 betragen. Wenn dagegen die Varianz des Istwertes größer als die des Sollwertes ist, bringt der Folgeregler von sich aus Unruhe in den Regelkreis, d. h. er ist vermutlich schlecht eingestellt. Dies führt zu einer entsprechenden Veränderung des Verhältnisses und der Kennzahl. Somit erlaubt das neue Verfahren auch eine Diagnose von Regelkreisen mit permanent veränderlichem Sollwert. Damit können in vorteilhafter Weise auch Folgeregler von Kaskaden- oder Verhältnisregelungen in die Regelkreisüberwachung einbezogen werden. Vorteilhaft wird vermieden, dass Schwierigkeiten in solchen Regelkreisen unbemerkt bleiben oder dass irreführende Meldungen wegen Fehlbewertungen solcher Regelkreise erzeugt werden.

Weil die Aufmerksamkeit von Anlagenfahrern bei Kaskadenregelungen eher dem Führungsregler als dem Folgeregler gewidmet wird und weil sich unruhiges Verhalten des Folgeregelkreises nicht unbedingt am Führungsregelkreis bemerkbar macht, zumal der Folgeregelkreis meist viel schneller als der Führungsregelkreis ausgelegt ist, war bisher das Risiko, dass Verschlechterungen am Folgeregelkreis unbemerkt bleiben, tatsächlich beträchtlich. Auch wenn sich unruhiges Verhalten des Folgeregelkreises nicht signifikant auf die Hauptregelgröße auswirkt, konnte es dennoch zu Nachteilen, z. B. schnellerem Verschleiß eines Stellglieds oder höherem Energieverbrauch, führen, weil das Stellglied für die Hauptregelgröße in einer Kaskadenregelung unmittelbar durch den Folgeregler und nicht durch den Führungsregler angesteuert wird.

Die Berechnung einer ersten Kennzahl $CPI_{Var}$ hat dabei den Vorteil, dass ihre Werte einem Bediener in sehr anschaulicher und leicht verständlicher Weise einen Eindruck über den Zustand des Regelkreises vermitteln. Für einen Regelkreis mit gutem Regelverhalten wird der Wert 100% für $CPI_{Var}$ angezeigt. In diesem Fall ist die Varianz des Istwerts kleiner als die Varianz der Sollwerte. Es gelingt dem Folgeregler also gut, den Istwert dem Sollwert nachzuführen. Falls der Sollwert hochfrequente Signalanteile aufweist, die außerhalb der Bandbreite des geschlossenen Regelkreises liegen, d. h. denen der Folgeregler nicht schnell genug folgen kann, so ist die Varianz des Istwerts geringer als die des Sollwerts. Ein derartiges Verhalten ist meist völlig unbedenklich und wird daher ebenfalls als gut angezeigt. Wenn dagegen die Varianz des Istwerts größer als die des Sollwerts ist, bringt der Folgeregler von sich aus Unruhe in den Regelkreis, d. h. er ist vermutlich schlecht eingestellt. Die damit verbundene Verschlechterung des Zustands des Regelkreises wird vorteilhaft durch Werte der Kennzahl $CPI_{Var}$ angezeigt, die entsprechend kleiner als 100% sind.

Der in der Berechnungsformel für die Kennzahl $CPI_{Var}$ verwendete Faktor s ist ein Sensitivitätsfaktor, der durch einen Bediener als Parameter einstellbar und in der Diagnoseeinrichtung mit dem Wert s=1 vorbelegt ist. Beispielsweise für eine kritischere Bewertung kann der Faktor s durch Bedienereingabe nach oben korrigiert werden. Damit bereits mit dem Wert s=1 der Voreinstellung, welche für den Bediener sehr anschaulich ist, eine für die meisten Fälle geeignete Bewertung der Regelkreisgüte durch Anzeige der Kenngröße $CPI_{Var}$ erhalten wird, enthält die Formel zusätzlich zum Sensitivitätsfaktor s den weiteren Faktor 0,5, der bei einer anderen Vorbelegung des Sensitivitätsfaktors s selbstverständlich entfallen kann.

Zusätzlich oder alternativ zur ersten Kennzahl $CPI_{Var}$ kann durch die Diagnoseeinrichtung eine zweite Kennzahl $CPI_{Kas}$ angezeigt werden, deren Berechnung auf den durchschnittlichen Änderungen der Istwert-Daten und der Sollwert-Daten von einem Abtastschritt zum jeweils nächsten beruht. Während die erste Kennzahl $CPI_{Var}$ nur die Varianz der Werte der im jeweils betrachteten Ausschnitt enthaltenen Daten von Sollwert und Istwert betrachtet, werden aufgrund der Berechnung der zweiten Kennzahl $CPI_{Kas}$ die Änderungen in den Zeitschritten der Abtastung miteinander verglichen. Falls der Istwert um den Sollwert herum schwingt, aber im Vergleich zum Wertebereich des Sollwerts mit einer kleinen Amplitude, fällt dies bei einer größeren Breite des betrachteten Ausschnitts der Folgen von Sollwert- und Istwert-Daten bei alleiniger Betrachtung der ersten Kenngröße $CPI_{Var}$ wenig oder gar nicht auf, da die Varianz trotzdem ähnlich bleibt. Dieses ungewünschte Verhalten ist dann leicht durch einen Bediener bei Betrachtung der zweiten Kennzahl $CPI_{Kas}$ erkennbar.

Vorteilhaft ist somit eine Anzeige sowohl der ersten Kennzahl $CPI_{Var}$ als auch der zweiten Kennzahl $CPI_{Kas}$ durch die Diagnoseeinrichtung, da die Betrachtung beider Kenngrößen eine besonders zuverlässige Bewertung des Zustands des Regelkreises ermöglicht. Die Breite des jeweils betrachteten Ausschnitts, d. h. die Anzahl N der Sollwert- bzw. der Istwert-Daten in den betrachteten Folgen, wird dabei so gewählt, dass zum einen Veränderungen des Zustands des Regelkreises leicht erkannt werden können und zum anderen ausreichend Daten zur Bewertung zur Verfügung stehen.

Die Diagnoseeinrichtung kann auf dieselbe Weise wie die bereits aus der EP 1 528 447 B1 bekannte Diagnoseeinrichtung vorteilhaft als Software-Funktionsbaustein ausgebildet werden, der in einer grafischen Bedienoberfläche eines Engineering-Systems mit Funktionsbausteinen des Regelkreises verschaltbar und zum Betrieb der Diagnoseeinrichtung in ein Automatisierungsgerät ladbar ist. Auf einem so genannten Faceplate zur Realisierung einer Mensch-Maschine-Schnittstelle auf einem Bedien- und Beobachtungsgerät der automatisierungstechnischen Anlage werden dann die beiden berechneten Kennzahlen $CPI_{Var}$ und $CPI_{Kas}$ zur Anzeige gebracht. Auf diesem Bedien- und Beobachtungssystem können durch einen Bediener, falls gewünscht, eine Änderung der Parametrierung, beispielsweise des Sensitivitätsfaktors s, eine Eingabe von Referenzwerten zur Alarmerzeugung bei Unterschreiten eines vorgegebenen Grenzwerts durch eine oder beide Kennzahlen usw. vorgenommen werden.

In besonders vorteilhafter Weise kann die neue Diagnoseeinrichtung zur Überwachung des Betriebs eines Regelkreises in einer Software-Umgebung zur Cloud-basierten Regelkreisüberwachung implementiert werden. Eine derartige Software-Umgebung stellt beispielsweise der datenbasierte Remote Service "Control Performance Analytics" der Siemens AG dar. Daten aus Kundenanlagen werden mithilfe von Software-Agenten gesammelt, aggregiert und an ein Siemens Service Operation Center geschickt, in welchem sie auf einem Remote Service-Rechner abgespeichert werden. Dort werden sie mithilfe von verschiedenen "Data Analytics" Software-Applikationen halbautomatisch ausgewertet. Bei Bedarf können für den Remote Service besonders geschulte Experten auf dieser Datenbasis hocheffizient arbeiten. Die Ergebnisse der Datenanalyse können auf einem Monitor des Remote Service-Rechners angezeigt und/oder auf einem Sharepoint bereitgestellt werden, sodass sie vom Endkunden, d. h. dem Bediener der automatisierungstechnischen Anlage, z. B. in einem Browser betrachtet werden können.

Das Diagnoseverfahren wird somit bevorzugt in Software oder in einer Kombination Soft-/Hardware implementiert, sodass die Erfindung auch ein Computerprogramm mit durch einen Computer ausführbaren Programmcodeanweisungen zur Implementierung des Diagnoseverfahrens betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm kann, wie oben beschrieben, in einem Speicher eines Automatisierungsgeräts vorgehalten oder in diesen geladen werden, sodass beim Betrieb des Automatisierungsgeräts die Überwachung des Betriebs eines Regelkreises automatisch durchgeführt wird, oder das Computerprogramm kann bei einer Cloud-basierten Überwachung von Regelkreisen in einem Speicher eines Remote Service-Rechners vorgehalten oder in diesen ladbar sein.

Anhand der Zeichnungen, in denen Ausführungsbeispiele der Erfindung dargestellt sind, werden im Folgenden die Erfindung sowie Ausgestaltungen und Vorteile näher erläutert.

Es zeigen:

Figur 1     eine Kaskadenregelung mit Diagnoseeinrichtung
Figur 2     eine Verhältnisregelung mit Diagnoseeinrichtung und
Figur 3     ein Zeitdiagramm mit Verläufen von Sollwert und Istwert.

In den Figuren sind gleiche Teile mit gleichen Bezugszeichen versehen.

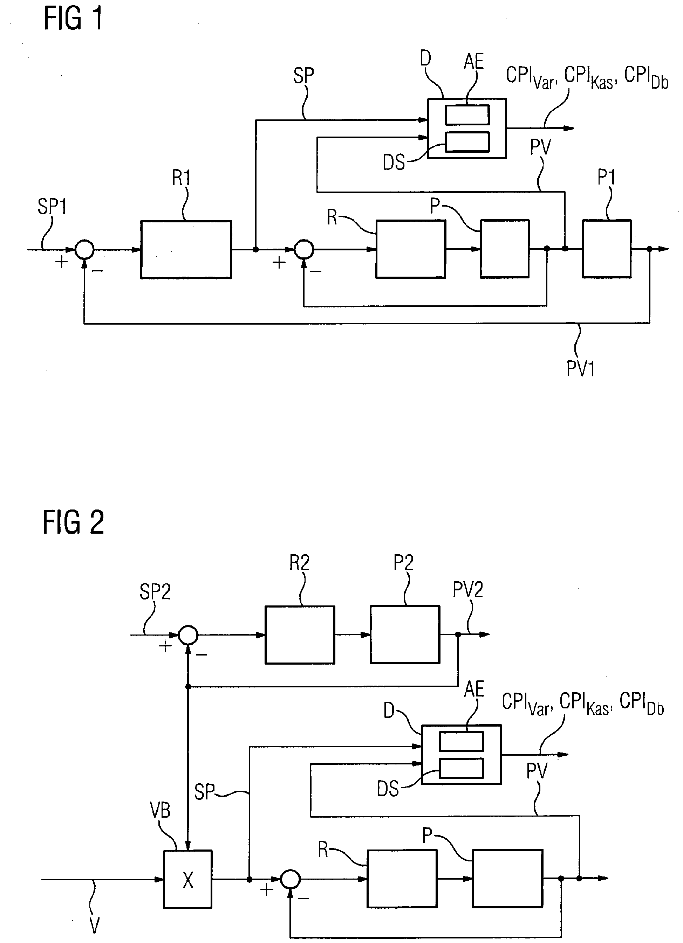

Bei den anhand der Figuren 1 und 2 verdeutlichten Beispielen von Regelkreisen in vermaschter Struktur handelt es sich zum einen um eine Kaskadenregelung (Figur 1) und zum anderen um eine Verhältnisregelung (Figur 2). Ein zu überwachender Regelkreis besteht aus einem Regler R und einem Prozess P, wobei der Regler R im Falle einer Kaskadenregelung als Folgeregler, im Falle einer Verhältnisregelung als Verhältnisregler bezeichnet wird. Im Falle einer Kaskadenregelung erhält der Regler R gemäß Figur 1 seinen Sollwert SP von einem Führungsregler R1, der Bestandteil eines äußeren Regelkreises zur Regelung einer Regelgröße PV1 eines Prozesses P1 ist. Die Regelgröße PV des Prozesses P wird im Folgenden auch als Istwert bezeichnet. Bei dem in Figur 2 gezeigten Beispiel einer Verhältnisregelung wird der Sollwert SP von einem Verhältnisbaustein VB geliefert, der diesen als Verhältnis eines Istwerts PV2 eines anderen Regelkreises und eines Verhältniswerts V berechnet. Der andere Regelkreis, dessen Istwert PV2 auf den Verhältnisbaustein VB gemäß Figur 2 aufgeschaltet ist, besteht wiederum aus einem Regler R2 und einem Prozess P2, wobei dem anderen Regelkreis ein Sollwert SP2 vorgegeben wird. Bei den in den Figuren 1 und 2 dargestellten vermaschten Strukturen erhält somit der Regler R als Folgeregler bzw. Verhältnisregler seinen Sollwert SP von einem anderen Regelkreis. Im Automatikbetrieb ändert sich daher die Sollwertvorgabe laufend und es gibt weder zeitliche Phasen mit konstantem Sollwert, noch saubere Sollwertsprünge, sodass die Regelgüte des aus dem Regler R und dem Prozess bestehenden unterlagerten Regelkreises nicht mit herkömmlichen Methoden zur Bewertung analysiert werden kann.

Durch eine Diagnoseeinrichtung D wird nun gemäß den Figuren 1 und 2 zusätzlich zum Istwert PV auch der Sollwert SP in die Auswertung einbezogen. Dazu werden Folgen von Sollwert- und Istwert-Daten in einem Datenspeicher DS hinterlegt. Anhand dieser Folgen berechnet eine Auswerteeinrichtung AE eine erste Maßzahl für die Streuung der Istwert-Daten und analog zur Bestimmung der ersten Maßzahl eine zweite Maßzahl für die Streuung der Sollwertdaten. Mithilfe des Verhältnisses der beiden Maßzahlen werden eine erste Kennzahl $CPI_{Var}$ und eine zweite Kennzahl $CPI_{Kas}$ berechnet und für eine Bewertung der Regelgüte angezeigt. Die Kennzahl $CPI_{Var}$ wird berechnet nach der Formel

$$CPI_{Var} = 100\% * \left( e^{s*0,5*\left(1-\frac{var(PV)}{var(SP)}\right)} \right),$$

wobei als erste Maßzahl die Varianz var(PV) der Istwert-Daten und als zweite Maßzahl die Varianz var(SP) der Sollwert-Daten als Maßzahlen für die Streuung der jeweiligen Daten herangezogen werden. Wenn der Regler R ideal arbeitet und es ihm gelingt, den Istwert PV gut dem Sollwert SP nachzuführen, sind die beiden Varianzen var(PV) und var(SP) etwa gleich groß. Gemäß der Berechnungsformel für $CPI_{Var}$ ergibt dies einen Wert von etwa 100%. Wenn dagegen die Varianz var(PV) des Istwerts PV größer als die Varianz var(SP) des Sollwerts SP ist, bringt der Regler R offensichtlich Unruhe in den aus dem Regler R und dem Prozess P gebildeten Regelkreis. Dies wird durch einen Wert der ersten Kennzahl $CPI_{Var}$ angezeigt, der entsprechend der Verschlechterung des Regelkreisverhaltens geringer als 100% ist. Durch Veränderung des Sensitivitätsfaktors s, der mit dem Wert 1 vorbelegt ist, kann ein Anwender seinen Wünschen entsprechend Anpassungen vornehmen, wenn bei einer bestimmten Verschlechterung des Regelkreisverhaltens geringere oder stärkere Veränderungen an der ersten Kennzahl $CPI_{Var}$ angezeigt werden sollen.

Bei der Berechnung der zweiten Kennzahl $CPI_{Kas}$ wird als Maßzahl für die Streuung der Sollwert- bzw. der Istwert-Daten die durchschnittliche Änderung von einem Abtastschritt zum jeweils nächsten berechnet. Die Formel lautet somit:

$$CPI_{Kas} = 100\% * \frac{\sqrt{\frac{1}{2(N-1)}\sum_{i=0}^{N-1}(SP_{i+1}-SP_i)^2}}{\sqrt{\frac{1}{2(N-1)}\sum_{i=0}^{N-1}(PV_{i+1}-PV_i)^2}} ,$$

wobei der Wert N die Länge des jeweils betrachteten Datenfensters wiedergibt. Mit der zweiten Kennzahl $CPI_{Kas}$ werden somit Änderungen in kleineren Zeitabschnitten betrachtet. Falls der Istwert PV um den Sollwert SP herum schwingt, aber im Vergleich zum Wertebereich des Sollwerts SP mit einer kleineren Amplitude, wird das Fehlverhalten an Veränderungen der zweiten Kennzahl $CPI_{Kas}$ deutlicher erkennbar als an der ersten Kennzahl $CPI_{Var}$. Durch Betrachtung der beiden Kennzahlen $CPI_{Var}$ und $CPI_{Kas}$ kann in vorteilhafter Weise vermieden werden, dass Schwierigkeiten in unterlagerten Regelkreisen unbemerkt bleiben oder irreführende Meldungen wegen Fehlbewertungen solcher Regelkreise erzeugt werden.

Handelt es sich bei dem Regler R um einen Regler mit Totzone, kann durch einen Bediener zusätzlich oder alternativ die Berechnung einer dritten Kennzahl $CPI_{Db}$ durch die Diagnoseeinrichtung D aktiviert werden. Aufgabe einer Totzone ist die Beruhigung der durch den Regler R erzeugten Stellsignale, solange sich die Regelgröße, d. h. der Istwert PV, innerhalb der Totzone Db um den Sollwert SP befindet. Kleinere Regelabweichungen, welche noch innerhalb der Totzone liegen, werden also durch den Regler R nicht ausgeregelt, um Verschleiß und Energieverbrauch von beispielsweise mechanischen Stellgliedern zu reduzieren. Ein besonders aussagekräftiges Kriterium zur Bewertung von Reglern mit Totzone ist daher der Zeitanteil

$$t(|SP - PV| < Db),$$

in dem sich die Regelgröße PV innerhalb der Totzone Db befindet, bezogen auf einen Zeitanteil t(AK) mit konstantem Sollwert im Automatikbetrieb AK. Die Berechnungsformel für die dritte Kennzahl $CPI_{Db}$ lautet:

$$CPI_{Db} = \frac{t(|SP - PV|<Db)}{t(AK)} * 100\%.$$

Wenn der Zeitanteil t(AK) zu gering ist, bedeutet das für die Kombination aus Reglerparametrierung und Dimensionierung der Totzone Db, dass der eigentliche Zweck der Totzone Db, nämlich die Beruhigung der Stellsignale, nur unvollständig erfüllt wird, weil die Regelabweichung zu häufig die Totzone Db verlässt. Entweder ist daher die Totzone Db zu schmal oder das Regelverhalten zu unruhig. Durch den Bediener können nach Anzeige eines derartigen Fehlverhaltens entsprechende Veränderungen an der Einstellung des Reglers R zur Behebung des Fehlverhaltens vorgenommen werden.

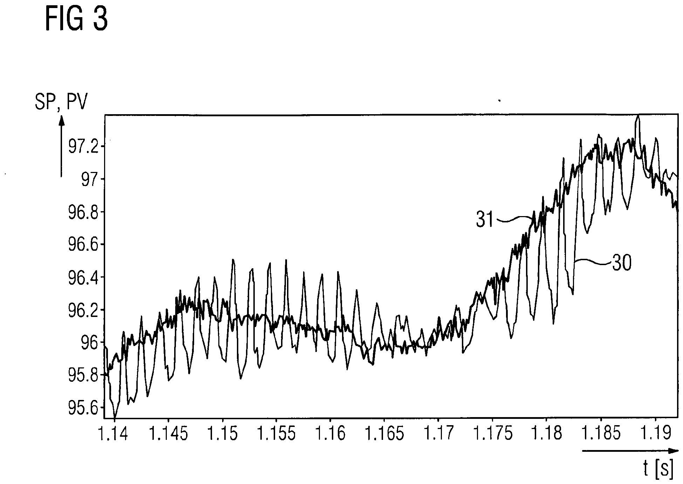

Figur 3 zeigt Verläufe 30 und 31 des Istwerts PV bzw. des Sollwerts SP für den Regler R in einer Kaskadenregelung gemäß Figur 1, welcher nicht optimal eingestellt ist. Auf der Abszisse des Zeit-Diagramms in Figur 3 ist die Zeit t in Sekunden, auf der Ordinate sind der Istwert PV und der Sollwert SP dimensionslos aufgetragen. Der dargestellte Ausschnitt einer größeren Folge von Sollwert- und Istwert-Daten umfasst etwa 500 Datenpaare. Anhand des Verlaufs 30 des Istwerts PV zeigt sich, dass offensichtlich eine Schwingung vorliegt, welche nicht vom Sollwert SP kommt, sondern andere Ursachen haben muss. Diese Schwingung wird insbesondere durch die zweite Kennzahl $CPI_{Kas}$ mit einem Wert von 60% gefunden. Wird die erste Kennzahl $CPI_{Var}$ über die gesamte Fensterbreite berechnet, so erhält man einen Wert von nahe 100% und damit keinen Hinweis auf das Problem, da die Varianzen von Sollwert und Istwert über den betrachteten Zeitbereich nahezu identisch sind. Das Beispiel zeigt, dass vorzugsweise die erste und die zweite Kenngröße gemeinsam einem Bediener zur Anzeige gebracht werden sollten. Für eine Aggregation beider Kennzahlen bietet sich eine Minimumbildung an: Wenn der Regler anhand der einen oder anderen Kennzahl negativ auffällt, d. h. das Minimum unter einem bestimmten Grenzwert liegt, sollte der Bediener auf ein mögliches Problem in diesem Regelkreis hingewiesen werden.

**Patentansprüche**

1.  Diagnoseeinrichtung zur Überwachung des Betriebs eines Folge- oder Verhältnisregelkreises (R, P) eines Automatisierungssystems, mit einem Datenspeicher (DS), in welchem jeweils eine Folge von Sollwert- und Istwert-Daten des Regelkreises abgespeichert ist, und die Diagnoseeinrichtung (D) hierfür ausgebildet ist, mit einer Auswerteeinrichtung (AE) zur Bestimmung jeweils eines stochastischen Merkmals anhand zumindest eines Ausschnitts der Folgen von Sollwert- und Istwert-Daten, wobei die Auswerteeinrichtung (AE) ausgebildet ist als stochastisches Merkmal der Istwert-Daten eine erste Maßzahl für deren Streuung zu bestimmen, **dadurch gekennzeichnet, dass** zur Überwachung des Betriebs des Folge- oder Verhältnisregelkreises in einer Kaskaden- bzw. Verhältnisregelung die Auswerteeinrichtung (AE) ausgebildet ist analog zur Bestimmung der ersten Maßzahl eine zweite Maßzahl für die Streuung der Sollwert-Daten als stochastisches Merkmal der Sollwert-Daten zu bestimmen und dass die Auswerteeinrichtung (AE) ausgebildet ist in Abhängigkeit des Verhältnisses der ersten Maßzahl zur zweiten Maßzahl eine Kennzahl ($CPI_{Var}$, $CPI_{Kas}$) zur Bewertung der Regelgüte zu bestimmen und/oder anzuzeigen.

2.  Diagnoseeinrichtung nach Anspruch 1, **dadurch gekennzeichnet, dass** die beiden Maßzahlen die Varianz (var(PV), var(SP)) der Daten des Istwerts (PV) bzw. der Daten des Sollwerts (SP) sind und dass eine erste Kennzahl $CPI_{Var}$ berechnet wird nach den Formeln:

$$\text{CPI}_{\text{Var}} = 100\% * \left( e^{s*0,5*\left(1-\frac{var(PV)}{var(SP)}\right)} \right),$$

$$\text{falls } \frac{var(PV)}{var(SP)} \geq 1,$$

und

$$\text{CPI}_{\text{Var}} = 100\%,$$

falls

$$\frac{var(PV)}{var(SP)} < 1,$$

wobei s ein mit dem Wert 1 vorbelegter, durch einen Bediener der Diagnoseeinrichtung veränderbarer Sensitivitätsfaktor ist.

3.  Diagnoseeinrichtung nach Anspruch 1 oder 2, **dadurch gekennzeichnet, dass** die beiden Maßzahlen durchschnittliche Änderungen der Istwert-Daten bzw. der Sollwert-Daten von einem Abtastschritt zum jeweils nächsten sind und dass eine zweite Kennzahl $CPI_{Kas}$ berechnet wird nach der Formel:

$$\text{CPI}_{\text{Kas}} = 100\% * \frac{\sqrt{\frac{1}{2(N-1)}\sum_{i=0}^{N-1}(SP_{i+1}-SP_i)^2}}{\sqrt{\frac{1}{2(N-1)}\sum_{i=0}^{N-1}(PV_{i+1}-PV_i)^2}},$$

wobei N die Anzahl der in die Bewertung einbezogenen Abtastschritte ist.

4.  Diagnoseeinrichtung nach einem der vorhergehenden Ansprüche, **dadurch gekennzeichnet, dass** zumindest der Datenspeicher (DS) und die Auswerteeinrichtung (AE) durch Software auf einem Remote Service-Rechner zur Ferndiagnose des Regelkreises implementiert sind.

**5.** Diagnoseverfahren zur Überwachung des Betriebs eines Folge- oder Verhältnisregelkreises in einer Kaskaden- bzw. Verhältnisregelung (R, P) eines Automatisierungssystems mit den folgenden Schritten:

- Abspeichern jeweils einer Folge von Sollwert- und Istwert-Daten des Regelkreises in einem Datenspeicher (DS),
- Bestimmen jeweils eines stochastischen Merkmals anhand zumindest eines Ausschnitts der Folgen von Sollwert- und Istwert-Daten durch eine Auswerteeinrichtung (AE), wobei als stochastisches Merkmal der Istwert-Daten eine erste Maßzahl für deren Streuung bestimmt wird,

**gekennzeichnet durch** die weiteren Schritte,

- Bestimmen einer zweiten Maßzahl für die Streuung der Sollwert-Daten als stochastisches Merkmal der Sollwert-Daten analog zur Bestimmung der ersten Maßzahl und
- Bestimmen und Anzeigen einer Kennzahl (CPI$_{Var}$, CPI$_{Kas}$) zur Bewertung der Regelgüte in Abhängigkeit des Verhältnisses der ersten Maßzahl zur zweiten Maßzahl.

**6.** Computerprogramm mit durch einen Computer ausführbaren Programmcodeanweisungen zur Implementierung des Verfahrens nach Anspruch 5, wenn das Computerprogramm auf einem Computer ausgeführt wird.

**7.** Computerprogrammprodukt, insbesondere Datenträger oder Speichermedium, mit einem durch einen Computer ausführbaren Computerprogramm gemäß Anspruch 6.

**Claims**

**1.** Diagnostic device for monitoring the operation of a slave or ratio control loop (R, P) of an automation system, with a data memory (DS) in which sequences of both setpoint data and actual-value data for the control loop are stored, and the diagnostic device (D) is embodied for this purpose, with an evaluation device (AE) for the determination in each case of a stochastic feature with reference to at least one segment of the sequences of setpoint and actual-value data, wherein the evaluation device (AE) is embodied to determine as the stochastic feature for the actual-value data a first dimension for the scatter thereof, **characterised in that**, for monitoring the operation of the slave or ratio control loop in a cascade or ratio control system, the evaluation device (AE) is embodied to determine a second dimension for the scatter of the setpoint data as a stochastic feature of the setpoint data similarly to the determination of the first dimension and that the evaluation device (AE) is embodied to determine and/or display a characteristic number (CPI$_{Var}$, CPI$_{Kas}$) for evaluating the control quality as a function of the ratio of the first dimension to the second dimension.

**2.** Diagnostic device according to claim 1, **characterised in that** the two characteristic numbers are the variance (var(PV), var(SP)) of the data of the actual value (PV) or the data of the setpoint (SP) and that a first characteristic number CPI$_{Var}$ is calculated using the following formulas:

$$\mathrm{CPI_{Var}} \;=\; 100\% \;*\; \left(e^{S*0.5*\left(1-\frac{var(PV)}{var(SP)}\right)}\right),$$

$$\mathrm{if}\;\; \frac{var(PV)}{var(SP)} \geq 1,$$

and

$$\mathrm{CPI_{Var}} \;=\; 100\%,$$

if

$$\frac{var(PV)}{var(SP)} < 1,$$

wherein s is a sensitivity factor preset with the value 1 that can be changed by an operator of the diagnostic device.

3. Diagnostic device according to claim 1 or 2, **characterised in that** the two characteristic numbers are average changes to the actual-value data or the setpoint data from one sampling step to the next one in each case and that a second characteristic number $CPI_{Kas}$ is calculated using the following formula:

$$CPI_{Kas} = 100\% * \frac{\sqrt{\frac{1}{2(N-1)}\sum_{i=0}^{N-1}(SP_{i+1}-SP_i)^2}}{\sqrt{\frac{1}{2(N-1)}\sum_{i=0}^{N-1}(PV_{i+1}-PV_i)^2}},$$

wherein N is the number of sampling steps included in the evaluation.

4. Diagnostic device according to one of the preceding claims, **characterised in that** at least the data memory (DS) and the evaluation device (AE) are implemented by software on a remote service computer for the remote diagnosis of the control loop.

5. Diagnostic method for monitoring the operation of a slave or ratio control loop in a cascade or ratio control system (R, P) of an automation system with the following steps:

   - storage of sequences of both setpoint and actual-value data of the control loop in a data memory (DS),
   - determination in each case of a stochastic feature with reference to at least one segment of the sequences of setpoint and actual-value data by an evaluation device (AE), wherein the stochastic feature determined for the actual-value data is a first dimension for the scatter thereof,

   **characterised by** the further steps,

   - determination of a second dimension for the scatter of the setpoint data as a stochastic feature of the setpoint data similarly to the determination of the first dimension and
   - determination and display of a characteristic number ($CPI_{Var}$, $CPI_{Kas}$) for evaluating the control quality as a function of the ratio of the first dimension to the second dimension.

6. Computer program with computer-executable program code instructions for the implementation of the method according to claim 5 when the computer program is executed on a computer.

7. Computer program product, in particular a data carrier or storage medium, with a computer-executable computer program according to claim 6.


**Revendications**

1. Dispositif de diagnostic pour contrôler le fonctionnement d'un circuit (R, P) de régulation, séquentiel ou proportionnel d'un système d'automatisation, comprenant une mémoire (DS) de données, dans laquelle est mise en mémoire, respectivement, une séquence de données de valeur de consigne et de valeur réelle du circuit de régulation, et le dispositif (D) de diagnostic est constitué pour, par un dispositif (AE) d'exploitation, déterminer respectivement une caractéristique stochastique à l'aide d'au moins une partie de la séquence de données de valeur de consigne et de valeur réelle, le dispositif (AE) d'exploitation étant constitué pour déterminer, comme caractéristique stochastique des données de valeur réelle, un premier nombre de mesure de leur dispersion, **caractérisé en ce que**, pour le contrôle du fonctionnement du circuit de régulation séquentiel ou proportionnel dans une régulation en cascade ou proportionnelle, le dispositif (AE) d'exploitation est constitué, d'une manière analogue à la détermination du premier nombre de mesure, pour déterminer un deuxième nombre de mesure de la dispersion des données de valeur de consigne, comme caractéristique stochastique des données de valeur de consigne, et **en ce que** le dispositif (AE) d'exploitation est constitué pour déterminer et/ou indiquer, en fonction du rapport du premier nombre de mesure au deuxième nombre de mesure, un nombre ($CPI_{Var}$, $CPI_{Kas}$) caractéristique pour évaluer la qualité de la régulation.

2. Dispositif de diagnostic suivant la revendication 1, **caractérisé en ce que** les deux nombres de mesure sont la variance (var(PV), var(SP)) des données de la valeur (PV) réelle ou des données de la valeur (SP) de consigne et **en ce que** l'on calcule un premier nombre CPI$_{Var}$ caractéristique suivant les formules :

$$CPI_{Var} = 100\% * \left(e^{s*0,5*\left(1-\frac{var(PV)}{var(SP)}\right)}\right),$$

$$si \ \frac{var(PV)}{var(SP)} \geq 1$$

et

$$CPI_{Var} = 100\%,$$

si

$$\frac{var(PV)}{var(SP)} < 1,$$

s étant un facteur de sensibilité, fixé d'abord à 1 et pouvant être modifié par un opérateur du dispositif de diagnostic.

3. Dispositif de diagnostic suivant la revendication 1 ou 2, **caractérisé en ce que** les deux nombres de mesure sont des variations moyennes des données de valeur réelle ou des données de valeur de consigne d'une partie d'échantillonnage à respectivement la suivante et **en ce que** l'on calcule un deuxième nombre CPI$_{Kas}$ caractéristique par la formule :

$$CPI_{Kas} = 100 * \frac{\sqrt{\frac{1}{2(N-1)}\sum_{i=0}^{N-1}(SP_{i+1}-SP_i)^2}}{\sqrt{\frac{1}{2(N-1)}\sum_{i=0}^{N-1}(PV_{i+1}-PV_i)^2}},$$

dans laquelle N est le nombre des stades d'échantillonnage inclus dans l'évaluation.

4. Dispositif de diagnostic suivant l'une des revendications précédentes, **caractérisé en ce qu'**au moins la mémoire (DS) de données et le dispositif (AE) d'exploitation sont mis en oeuvre par logiciel sur un ordinateur de service à distance pour le diagnostic à distance du circuit de régulation.

5. Procédé de diagnostic pour contrôler le fonctionnement d'un circuit séquentiel ou proportionnel dans une régulation (R, P) en cascade ou proportionnelle d'un système d'automatisation, comprenant les stades suivants :

- mise respectivement d'une séquence de donnés de valeur de consigne et de valeur réelle du circuit de régulation en mémoire dans une mémoire (DS) de données,
- détermination respectivement d'une caractéristique stochastique à l'aide d'au moins une partie des séquences des données de valeur de consigne et de valeur réelle par un dispositif (AE) d'exploitation, dans lequel on détermine, comme caractéristique stochastique des données de valeur réelle, un premier nombre de mesure de leur dispersion,

**caractérisé par** les autres stades,

- détermination d'un deuxième nombre de mesure de la dispersion des données de valeur réelle, comme caractéristique stochastique des données de valeur de consigne, d'une manière analogue à la détermination du premier nombre de mesure et

- détermination et indication d'un nombre ($CPI_{Var}$, $CPI_{Kas}$) caractéristique pour évaluer la qualité de la régulation en fonction du rapport du premier nombre de mesure au deuxième nombre de mesure.

**6.** Programme d'ordinateur, ayant des instructions de code de programme pouvant être réalisées par un ordinateur pour la mise en oeuvre du procédé suivant la revendication 5, lorsque le programme d'ordinateur est réalisé sur un ordinateur.

**7.** Produit de programme d'ordinateur, notamment support de données ou support de mémoire, ayant un programme d'ordinateur suivant la revendication 6 pouvant être réalisé par un ordinateur.

EP 3 056 957 B1

## FIG 1

## FIG 2

11

## FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   EP 1528447 B1

**In der Beschreibung aufgeführte Nicht-Patentliteratur**

*   **R. A. GHRAIZI ; E. MARTINEZ ; C. PRADA ; F. CIFUENTES ; J. MARTINEZ.** Performance monitoring of industrial controllers based on the predictability of controller behaviour. *Computers and Chemical Engineering,* 2007, vol. 31, 477-486